## Europäisches Patentamt

### European Patent Office

### Office européen des brevets

(11) Publication number: **0 068 027**
**B1**

(12) **EUROPEAN PATENT SPECIFICATION**

(45) Date of publication of patent specification: **28.06.89**

(21) Application number: **82900135.3**

(22) Date of filing: **23.12.81**

(86) International application number:
**PCT/JP81/00403**

(87) International publication number:
**WO 82/02354 22.07.82 Gazette 82/18**

(51) Int. Cl.⁴: **B 23 H 1/00**

(54) **SHAPE CORRECTING SYSTEM FOR WIRE CUT ELECTRIC DISCHARGE MACHINING.**

(30) Priority: **30.12.80 JP 186743/80**

(43) Date of publication of application:
**05.01.83 Bulletin 83/01**

(45) Publication of the grant of the patent:
**28.06.89 Bulletin 89/26**

(84) Designated Contracting States:
**CH DE FR GB LI**

(56) References cited:
**JP-A-51 043 296**
**JP-A-54 099 294**
**JP-A-54 120 495**

(73) Proprietor: **FANUC LTD**
**3580, Shibokusa Aza-Komanba Oshino-mura**
**Minamitsuru-gun Yamanashi 401-05 (JP)**

(72) Inventor: **OBARA, Haruki**
**844-7, Hashimoto Sagamihara-shi**
**Kanagawa 229 (JP)**

(74) Representative: **Billington, Lawrence Emlyn et al**
**HASELTINE LAKE & CO Hazlitt House**
**28 Southampton Buildings Chancery Lane**
**London WC2A 1AT (GB)**

Courier Press, Leamington Spa, England.

# Description

The present invention relates to a shape compensating system in wire-cut electric discharge machining, and more particularly to a shape compensating system which can automatically correct a machining error based on the flexure of a wire electrode due to electric discharge.

A wire-cut electric discharge machine is such that a predetermined gap is maintained between a wire electrode and a workpiece, while a voltage is applied therebetween to cause spark discharge across the gap, whereby the workpiece is cut by the discharge energy. Accordingly, when the workpiece is moved relative to the wire on the basis of machining command data, it can be machined into a desired shape. In the wire-cut electric discharge machine, however, when the wire electrode advances in a groove in the workpiece in a predetermined direction while cutting the workpiece, a pressure attributed to the electric discharge develops between the wire electrode and the workpiece, with the result that the wire electrode is pushed back in the direction opposite to the advancing direction. Therefore, the wire electrode lies behind the position of wire guides. That is, the wire electrode flexes. In case of performing the electric discharge machining of a straight line, the flexure is not a serious problem. In contrast, in a case where the advancing direction of the workpiece has been changed into the orthogonal direction on the basis of a machining command in order to machine a corner, the discharging part of the wire electrode is dragged inward on account of the flexure of the wire electrode ascribable to the electric discharge, and unlike the commanded shape, the machining path of the groove deviates on the inner side considerably, so that the machined shape becomes blunt. Also in case of performing a machining operation depictive of a circular arc, a similar error develops. This necessitates such a countermeasure in which the flexure value of the wire electrode is measured in advance, and in case of machining the corner, the workpiece is moved to a somewhat greater extent in correspondence with the flexure value.

There has heretofore been developed a technique for solving the above problem. More specifically, Japanese Laid-Open Patent Publication No. 54-99294 discloses a shape compensating method in wire-cutting electric discharge machining. According to the disclosed method, a dimensional error is first experimentally determined between the radius of an arc of a workpiece profile plotted on a discharge machining drawing, and the radius of an actual arc to be cut in the workpiece by a wire electrode based on the discharge machining drawing. As many such dimensional errors are measured as there are arcs that are required to be machined. These dimensional errors that have experimentally been obtained are then stored as a data table in a memory within a programming computer which will produce a machining program. When programming a drawing shape that is to be actually machined, the radius of an arc on the drawing is input to the programming computer, which then searches the data table for a dimensional error corresponding to the input arc radius, and adds the retrieved dimensional error to the input arc radius to obtain a new arc radius. An actual path to be followed by the wire electrode is programmed on the basis of new arc radii thus determined. However, arc machining errors are not produced uniformly during actual wire-cut discharge machining, but may vary due to flexure of the wire electrode. Therefore, the prior art arrangement fails to provide practical compensation of dimensional errors of machined arcs in a manner to be commensurate with flexure of the wire electrode.

According to one aspect of the present invention there is provided a method of controlling the operation of a wire-cut electric discharge machine wherein electric discharge is produced between a wire electrode and a workpiece by applying therebetween electric discharge shots and by producing relative movement between the workpiece and the wire electrode so that the workpiece is cut into a predetermined shape, wherein an error component in the machining path is compensated, characterised in that the error component which is compensated is ascribable to flexure of the wire electrode caused by the electric discharge, and is compensated automatically in linear machining by utilising a calculated compensation flexure, value $D_T$ in a direction tangential to a machining path, and is compensated in circular arc machining utilising the tangential compensation flexure value $D_T$ and also a calculated compensation flexure value $D_R$ in a direction radial to the machining path, wherein $D_T$ is automatically calculated on the basis of a measured flexure value $D_o'$ occurring during straight line machining at a predetermined cutting speed $F_o$, the corresponding machined groove width $2\varepsilon_o$ and the wire diameter $\phi$, and $D_R$ is automatically calculated on the basis of the measured flexure value $D_o'$ and the radius $R$ of the machining path, the calculations being made assuming that the energies of successive shots of the electric discharge are equal, and in dependence upon the following expressions:

$$D_T = \frac{F}{F_o} D_o,$$

and

$$D_R = D_o \cdot \frac{4}{3\pi} \cdot \frac{F}{F_o} \cdot \frac{\varepsilon_o}{R}$$

wherein $F$ is the cutting speed from which the compensation is applied and wherein $D_o$ is the actual wire electrode flexure value caused by the electric discharge during straight line machining at the predetermined cutting speed $F_o$ and is calculated from the expression

$$D_o = D_o' + (2\varepsilon_o - \phi)/2.$$

According to another aspect of the present invention there is provided a wire-cut electric discharge machining apparatus operable to carry out the method of the preceding paragraph and comprising a numerical control device including: a memory which stores a processing program for shape compensation as defined in the preceding paragraph and a control program for executing other numerical control processing; a processing unit for executing predetermined processing on the basis of commands from the control program and a machining program; a data memory for storing data and other calculated results; and a storage medium reader for reading a machining program containing machining data such as electric discharge machining paths and machining speeds, the numerical control device being coupled to a wire-cut electric discharge machine provided with a contact sensing device for detecting contact between a wire electrode and a workpiece.

The present invention provides a shape compensating method and apparatus in wire-cut electric discharge machining which can correct the path of a wire electrode in dependence on a flexure value, thereby to reduce machining errors. In a preferred example, what extent of flexure the wire electrode of an electric discharge machine has at a certain feed speed and under a specified machining groove width and a wire diameter, is calculated by an NC in advance, and the path of the wire electrode is corrected by the use of the resulting flexure values $D_T$ and $D_R$ in a tangential direction and radial direction ($D_R = O$ for rectilinear motion). More specifically, the correlation equations between the original coordinate positions $(x_i, y_i)$ of the wire electrode and the corrected coordinate positions $(X_i, Y_i)$ thereof are obtained beforehand, and the corrected coordinate positions are successively calculated by the use of the known flexure values. Accordingly, letting $(X_{i-1}, Y_{i-1})$ denote a corrected position a short time ago (this position being known) and $(X_i, Y_i)$ denote the next corrected position calculated, movement values $\Delta X$ and $\Delta Y$ are obtained as follows:

$$\Delta X = X_i - X_{i-1}$$

$$\Delta Y = Y_i - Y_{i-1}$$

In accordance with the movement values $\Delta X_n$ and $\Delta Y_n$, pulse distributions are executed to rotate motors, whereby the flexure values in a straight machining operation and a circular arc machining operation are compensated.

Brief description of the drawings

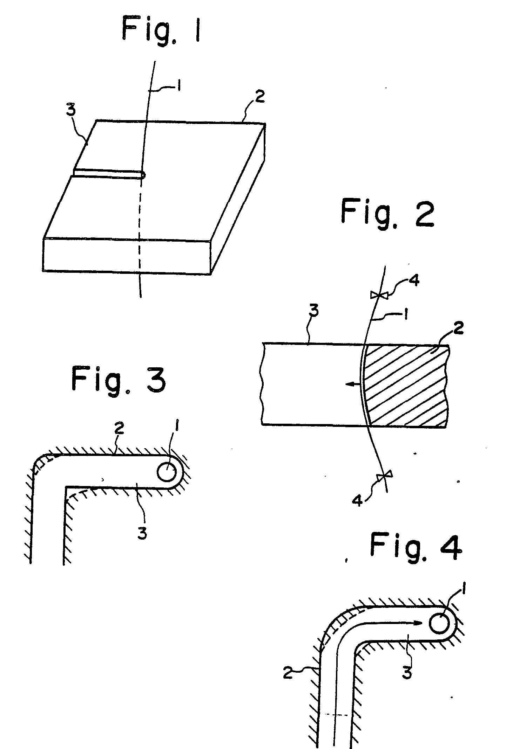

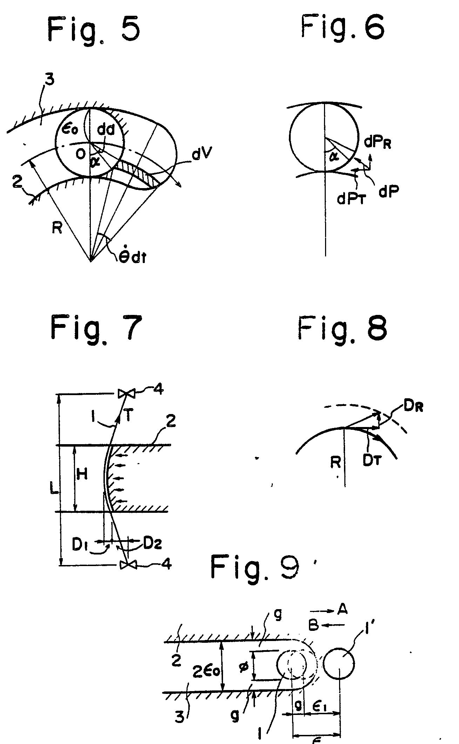

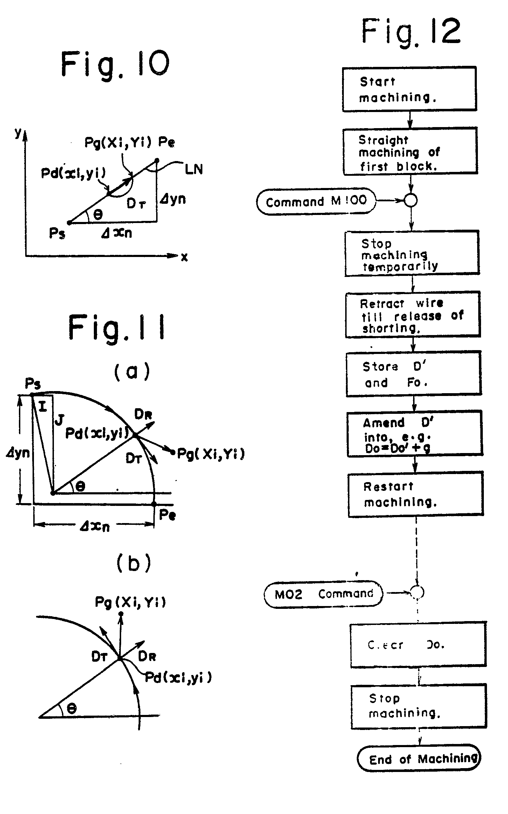

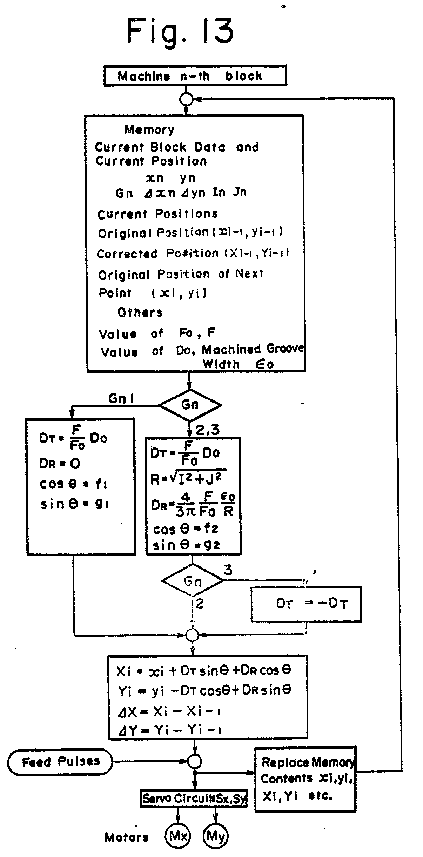

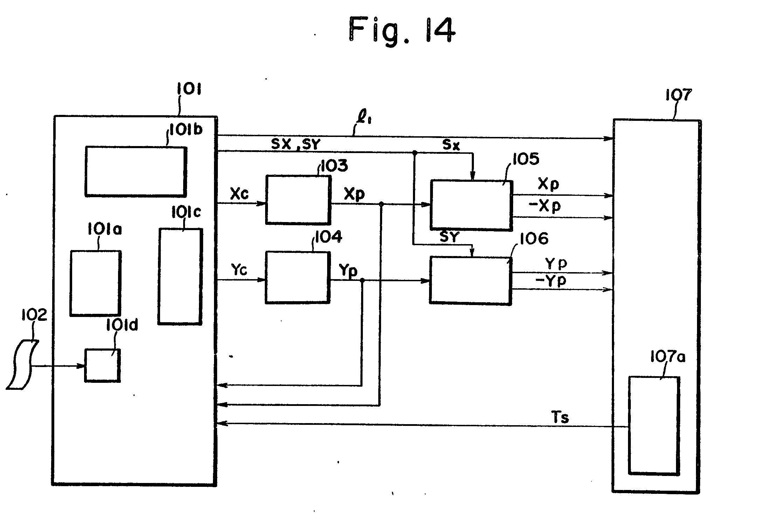

Figure 1 is an explanatory view of wire-cut electric discharge machining; Figure 2 is a view for elucidating the flexure of a wire electrode; Figures 3 and 4 are explanatory views for elucidating machining errors ascribable to the flexure; Figures 5, 6, 7 and 8 are explanatory diagrams for calculating flexure values in a tangential direction and a radial direction; Figure 9 is an explanatory diagram of a method of measuring a flexure value in a straight machining operation; Figures 10 and 11 are explanatory diagrams for correcting wire paths in the straight machining operation and a circular arc machining operation, respectively; Figures 12 and 13 are flow diagrams of an example of the present invention; and Figure 14 is a block diagram for realizing a shape compensating system according to the pressnt invention.

In a wire-cut electric discharge machine, when a wire electrode 1 advances in a groove 3 in a workpiece 2 in a predetermined direction while cutting the workpiece, as shown in Figure 1, a pressure attributed to an electric discharge develops between the wire electrode 1 and the workpiece 2 as illustrated in Figure 2, with the result that the wire electrode 1 is pushed back in the direction of an arrow, namely, in the direction opposite to the advancing direction. Therefore, the wire electrode 1 lies behind the position of wire guides 4, 4. That is, the wire electrode 1 flexes. In case of performing the electric discharge machining of a straight line, the flexure is not a serious problem. In contrast, in a case where the advancing direction of the workpiece has been changed into the orthogonal direction on the basis of a machining command in order to machine a corner, as illustrated in Figure 3, the discharging part of the wire electrode is dragged inward on account of the flexure of the wire electrode ascribable to the electric discharge, the unlike the commanded shape (indicated by a solid line), the machining path of the groove 3 deviates on the inner side considerably, so that the machined shape becomes blunt, as indicated by dotted lines. Also in case of performing a machining operation depictive of a circular arc as shown in Figure 4, a similar error develops.

A shape compensating system which eliminates such disadvantages and reduces machining errors, will now be described in detail in conjunction with an embodiment of the present invention with reference to the accompanying drawings.

In the straight machining operation, the flexure of the wire electrode appears in the reverse direction (tangential direction) to the machining advance direction due to the discharge pressure during machining. In case of machining a circular arc or a corner, the wire electrode flexes, not only in the tangential direction, but also inwardly of the circular arc, in other words, in the radial direction because the quantities of machining of an outer side and an inner side with respect to the center locus of the wire electrode are unequal. In order to perform the wire-cut electric discharge machining at high precision, therefore, the machining needs to be controlled in consideration of both the force acting in the tangential direction and the force acting in the radial direction of the wire machining path. Accordingly, the wire path is corrected in consideration of these forces, namely, the tangential and radial flexure values, whereby the shape is prevented from slackening.

Hereunder, calculating equations for obtaining the flexure value $D_T$ in the tangential direction and the flexure value $D_R$ in the radial direction will be first derived, and the steps of a method of correcting a machining path by the use of the values $D_T$, $D_R$ will be subsequently described in succession.

(A) Derivation of Equations for Calculating Tangential and Radial Flexure Values $D_T$, $D_R$:

It is now supposed that, as shown in Figure 5, a wire electrode 1 machines a workpiece 2 by moving a circular arc locus of radius R. The width of a machined groove is assumed to be $2 \varepsilon_o$.

When the wire electrode 1 has moved by an angle $\dot{\theta} dt$ within a period of time dt, the time differential value $d\dot{V}$ of the quantity of machining at a position of angle $\alpha$ in Figure 5 becomes as follows, with the workpiece assumed to have a unit thickness:

$$d\dot{V} = \frac{d}{dt}(dV)$$

$$= (R - \varepsilon_o \cos \alpha)\dot{\theta} \, dt \cdot \varepsilon_o \, d\alpha \sin \alpha/dt$$

Here, letting F denote a feed speed,

$$F = R\dot{\theta} \qquad (1)$$

Therefore, the following holds:

$$d\dot{V} = F \varepsilon_o (\sin \alpha - \frac{\varepsilon_o}{R}\sin \alpha \cdot \cos \alpha)d\alpha \qquad (2)$$

When $d\dot{V}$ is integrated from $\alpha=0$ to $\pi$ under the condition that the electric discharge occurs on only the front surface of the wire electrode 1, the following is obtained:

$$\dot{V} = 2F \varepsilon_o \qquad (3)$$

Here, the pressure acting on the wire electrode 1 at the position of the angle $\alpha$ in Figure 5 is considered in the state of Figure 6, and the following assumptions ① and ② are made:

① The pressure which is exerted on the wire electrode surface by the electric discharge is proportional to a discharging frequency, which in turn is proportional to the quantity of machining per unit time, in other words, the machining speed.

② The pressure acts perpendicularly to the wire electrode surface.

Accordingly, the radial force $dP_R$ exerted on the wire electrode 1 by the quantity of machining $d\dot{V}$ per unit time becomes:

$$dP_R = dP \cdot \cos \alpha$$

$$= K \, d\dot{V} \cos \alpha$$

$$= K F \varepsilon_o (\sin \alpha - \frac{\varepsilon_o}{R}\sin \alpha \cdot \cos \alpha) \, d\alpha \cdot \cos \alpha \qquad (4)$$

When $dP_R$ is integrated from $\alpha=0$ to $\pi$ ($dP_R$ being directed outward), the result becomes:

$$P_R = \frac{2}{3R} K F \varepsilon_o{}^2 \qquad (5)$$

In Equation (5), K is a proportional constant. In addition, $P_R$ originally varies if the energy of one shot of the electric discharge differs. In this regard, however, it is assumed here that the energies of the respective shots of the electric discharge are equal (C and V in $CV^2/2$ are held constant in the machining).

Likewise, the tangential force $dP_T$ on the wire electrode 1 becomes:

$$dP_T = dP \cdot \sin \alpha$$

$$= K F \varepsilon_o (\sin \alpha - \frac{\varepsilon_o}{R}\sin \alpha \cdot \cos \alpha) \, d\alpha \cdot \sin \alpha$$

When $dP_T$ is integrated from $\alpha=0$ to $\pi$, the result becomes:

$$P_T = \frac{\pi}{2} \cdot K F \varepsilon_o \qquad (6)$$

As apparent from Equations (3) and (6), $\dot{V}$ and $P_T$ are independent of the circular arc radius R. It can therefore be said that they are the quantity of machining and the force on the wire electrode 1 in the straight machining operation, respectively.

Referring to Figure 7, the flexure value of the wire electrode 1 can be approximately expressed as follows:

$$D_1 = P H/4 T$$

$$D_2 = (L-H) P/2 T$$

$$D = D_1 + D_2 = K_2 P \qquad (7)$$

where P denotes the pressure, H the thickness of the workpiece 2, L the vertical distance between guides 4, 4, and T the tension of the wire.

As seen from Equation (7), the flexure value D is proportional to the force acting on the wire electrode 1. In consideration of the assumption ①, therefore, the following equations hold when $D_o$ denotes the flexure value during the straight machining at a machining speed $F_o$, while $D_T$ and $D_R$ denote the flexure values based on the tangential force $P_T$ and the radial force $P_R$, respectively:

$$\frac{D_T}{D_o} = \frac{P_T}{P_o} = \frac{F}{F_o} \qquad (8)$$

$$\frac{D_R}{D_o} = \frac{P_R}{P_o} = -\frac{4}{3\pi} \cdot \frac{F}{F_o} \cdot \frac{\varepsilon_o}{R} \qquad (9)$$

Equation (9) can be derived using Equations (6) and (8).

The tangential and radial flexure values $D_T$ and $D_R$ are obtained from the above equations (8) and (9) when the machine groove width $2\varepsilon_o$ and the flexure value $D_o$ during the straight machining at the maching speed $F_o$ have been measured. It can be said that proper machining is carried out at all times by correcting the wire locus to the extents of the values $D_T$ and $D_R$. That is, in case of machining a circular arc in Figure 8, a locus which precedes by $D_T$ and $-D_R$ in the tangential direction and the radial direction may be depicted. In case of machining a straight line, $D_R=0$ holds.

In calculating $D_T$ and $D_R$, $D_o$, $F$, $F_o$, $\varepsilon_o$ and $R$ are required. The radius $R$ is obtained from machining data, while the machined groove width $2\varepsilon_o$ is known in advance by actually test-machining the workpiece and measuring the dimension, and they are stored in an NC. Further, $F$ denotes the actual feed speed and is known. In order to calculate $D_T$ and $D_R$, accordingly, the NC must know the flexure value $D_o$ during the straight machining and the machining speed $F_o$ during this straight machining.

(B) Measurement of flexure value $D_o$ during straight machining:

Figure 9 is an explanatory view for measuring the flexure value $D_o$. The measurement of the flexure value $D_o$ during the straight machining is carried out as stated below.

In the course of straight machining, the electric discharge is once stopped at a predetermined measurement point (Figure 9). Since the cessation of the electric discyarge results in nullifying the pressure of the electric discharge, the wire electrode 1 having flexed is drawn toward the guides to come into contact with the workpiece 2. When the wire electrode 1 has come into contact with the workpiece 2, a contact sensing device to be described later senses this contact.

From the state in which the wire electrode 1 lies in contact with the workpiece 2, the wire electrode 1 is retracted relative to the workpiece 2 along the machining path. In the retraction control, a table on which the workpiece 2 is placed may be moved relative to the wire 1 in the direction of an arrow A, or the guides may be retracted relative to the workpiece in the direction of an arrow B in a wire-cut electric discharge machine of the construction in which the guides can be moved.

As the retraction control is continued, the contact between the wire electrode and the workpiece ends at any time. The retraction distance $D_o'$ from the discharge stopping position to the position where the contact between the wire electrode and the workpiece ends is measured, and is stored in a memory built in the NC.

When the true flexure value $D_o$ is subsequently calculated in accordance with the following equation, the measurement of the flexure value ends:

$$D_o = g + D_o' \qquad (10)$$

Here, $g$ denotes the gap of the electric discharge, and it is obtained from the following equation when the width of the machined groove is indicated by $l$ and the diameter of the wire by $\phi$ as shown in Figure 9:

$$g = (2\varepsilon_o - \phi)/2 \qquad (11)$$

Accordingly, when the machined groove width $2\varepsilon_o$ and the wire diameter $\phi$ are measured and entered into the NC in advance, the flexure value $D_o$ is found by executing the calculations of Equations (10) and (11). $F_o$ is stored in the NC as the machining speed in the $D_o$ measuring operation, simultaneously with $D_o$.

(C) Correction of wire path:

When the tangential and radial flexure values $D_T$ and $D_R$ have been obtained, the wire path is subsequently corrected.

Figure 10 is an explanatory diagram in the case of correcting the wire path in the straight machining operation (when a G function instruction G01 is issued). $P_s$ denotes the starting point of a straight line LN, $P_e$ the end point thereof, $\Delta x_n$ and $\Delta y_n$ the incremental values of respective axes between the starting point and the end point, $P_d$ the original position of the wire having coordinate values $(x_l, y_l)$, and $P_g$ and corrected position of the wire having coordinate values $(X_l, Y_l)$. Since the distance between the positions $P_g$ and $P_d$ is $D_T$, the following equations hold between $x_l$, $y_l$ and $X_l$, $Y_l$:

$$\left.\begin{array}{l} X_l = x_l + D_T \cdot \cos\theta \\ Y_l = y_l + D_T \cdot \sin\theta \end{array}\right\} \qquad (12)$$

$$\sin\theta = \Delta y_n / \sqrt{\Delta x_n^2 + \Delta y_n^2} = g_1$$

$$\cos\theta = \Delta x_n / \sqrt{\Delta x_n^2 + \Delta y_n^2} = f_1$$

Accordingly, letting $(X_{l-1}, Y_{l-1})$ denote the corrected position of a short time ago (known) and $(X_l, Y_l)$ denote the next corrected position, movement values $\Delta X$ and $\Delta Y$ are obtained from the following equations by the use of Equations (12):

$$\left.\begin{array}{l} \Delta X = X_l - X_{l-1} \\ \Delta Y = Y_l - Y_{l-1} \end{array}\right\} \qquad (13)$$

Pulse distributions are executed in accordance with the movement values $\Delta X_n$ and $\Delta Y_n$, to generate distributed pulses in numbers corresponding to these values $\Delta X_n$ and $\Delta Y_n$. Thenceforth, the flexure value $D_T$ in the straight machining operation can be compensated by similar processing.

It is also permissible to change the incremental command values $\Delta_{xn}$ and $\Delta y_n$ to:

$$\Delta x_n' = \Delta x_n \pm D_T \cdot \cos\theta$$

$$\Delta y_n' = \Delta y_n \pm D_T \cdot \sin\theta$$

on the basis of which rectilinear interpolations are performed. Here, the signs depend upon the sense of the straight line.

Figures 11(a) and 11(b) are explanatory diagrams in the cases of correcting wire paths in the operation of machining a clockwise circular arc (GO2="1") and in the operation of machining a counterclockwise circular arc (GO3="1"), respectively. $P_d$ designates the original position of the wire having coordinate values $(x_i, y_i, P_g(X_i, Y_i)$ the corrected position of the wire, $P_s(x_n, y_n)$ a starting point, and $P_e$ an end point. Now, (I, J) denote X- and Y-axial components from the starting point $P_s$ to the center of the circular arc, and $(\Delta x_n, \Delta y_n)$ denote incremental values from the starting point $P_s$ to the end point $P_e$. Then, the following holds in the first quadrant as to the clockwise circular arc:

$$\left.\begin{array}{l} X_i = x_i + D_T \cdot \sin\theta + D_R \cdot \cos\theta \\[2mm] Y_i = y_i - D_T \cdot \cos\theta + D_R \cdot \sin\theta \end{array}\right\} \quad (14)$$

$$\sin\theta = \frac{1}{R_n}(y_i - y_n - J) = g_2$$

$$\cos\theta = \frac{1}{R_n}(x_i - x_n - I) = f_2$$

On the other hand, the following holds as to the counterclockwise circular arc:

$$\left.\begin{array}{l} X_i = x_i - D_T \cdot \sin\theta + D_R \cdot \cos\theta \\[2mm] Y_i = y_i + D_T \cdot \cos\theta + D_R \cdot \sin\theta \end{array}\right\} \quad (15)$$

$$\sin\theta = \frac{1}{R_n}(y_i - y_n - J)$$

$$\cos\theta = \frac{1}{R_n}(x_i - x_n - I)$$

Accordingly, letting $(X_{i-1}, Y_{i-1})$ denote the corrected position of a short time ago (known) and $(X_i, Y_i)$ denote the next corrected position, $X_i$ and $Y_i$ are obtained from Equations (14) or (15), and movement values $\Delta X$ and $\Delta Y$ are calculated from Equations (13). When the motors are rotated by generating feed pulses in accordance with these movement values $\Delta X_n$ and $\Delta Y_n$, the flexure values in the operation of machining the circular arc can be compensated.

The compensations can also be executed by changing circular arc command values.

Figure 12 is a flow diagram for measuring the flexure value $D_0$ during the straight machining in the wire-cut electric discharge machining, while Figure 13 is a flow diagram of the shape compensating calculations.

In the machining program, an M code such as M100 is appointed in the first command straight block of machining or the command straight block directly preceding a part where the control is started. Owing to this appointment, the machining is stopped, and the wire electrode is retracted to automatically measure the flexure value $D_0$. In addition, at the end of the last machining operation, $D_0$ is usually cleared in the NC when M02 indicating the end of machining is commanded. This is intended to prevent any erroneous correction in the case where M100 is not appointed in the next machining (Figure 12).

When the straight machining of one block has ended after starting the machining, M100 is commanded. Then, the machining is stopped, the wire electrode is retracted, the retraction distance $D_0'$ till the end of the shorting is stored, and $D_0'$ is amended into, e.g., $D_0'+g$, which is stored. Subsequently, machining is started again. In the machining of the n-th block, the starting point $x_n$, $y_n$, and command values $G_n$, $\Delta x_n$, $\Delta y_n$, $I_n$ and $J_n$ of the n-th block as to the original path have been given, the current position $x_{i-1}$, $y_{i-1}$ of the original path and the corrected position $X_{i-1}$, $Y_{i-1}$ are set, and the position $x_i$, $y_i$ of the original path to which the wire electrode ought to move next is set. The value $\varepsilon_0$ is already stored in the NC, and so are $F_0$ and $D_0$. The feed speed F of the original path is also made known. Depending upon whether the groove is the straight line, clockwise circular arc or counterclockwise circular arc; 1, 2 or 3 is given as $G_n$.

First, $D_T$ and $D_R$ are obtained in accordance with the value of $G_n$, and $\sin\theta$ and $\cos\theta$ indicated in Figure 10 or Figure 11 are obtained. From them, $X_i$ and $Y_i$ are obtained so as to find the values $\Delta X$ and $\Delta Y$ by which the wire electrode ought to move. The feed pulses are generated according to the values of $\Delta X$ and $\Delta Y$, and are delivered to servo circuits $S_x$ and $S_y$ so as to move the wire electrode by $\Delta X$ and $\Delta Y$. Thus, the servo circuits $S_x$ and $S_y$ rotate the motors $M_x$ and $M_y$. When the wire has moved, the values of the memory within the NC are replaced with new values, whereupon the control flow returns to the first step of the n-th block. When the machining of the n-th block has ended, the control flow shifts to the next block, and similar calculations are continued.

Since the value of the feed speed F is the speed in the original path, it is determined by the number of feed pulses per unit time. (It is not the speed in the corrected path).

When M02 is commanded upon the end of the machining, the value of $D_0$ is cleared and the machining is stopped.

Figure 14 is a block diagram for realizing the shape compensating system as hereinbefore described.

Referring to the figure, numeral 101 designates an NC (numerical control device) constructed of a microcomputer. It includes a memory 101a which stores a processing program for compensating the shape and a control program for executing the other numerical control processing, a processing unit 101b which executes predetermined processing on the basis of commands from the control program and a machining program to be described below, a data memory 101c which stores data and other calculated results, a tape reader 101d, etc. Numeral 102 designates a machining program tape, in which are punched machining data such as electric discharge machining paths and machining speeds. The auxiliary function instructions M100 for the flexure value measurement are entered in suitable places of the machining program. Numerals 103 and 104 indicate pulse distributors which execute predetermined pulse distribution calculations on the basis of movement value commands $X_c$ and $Y_c$ issued from the NC, so as to provide distributed pulses $X_p$ and $Y_p$, respectively. Numerals 105 and 106 indicate moving direction controllers, which change the signs of the distributed pulses and then provide the resulting pulses in the retraction control. Shown at numeral 107 is a wire-cut electric discharge machine, which is provided with a contact sensing device 107a for detecting the contact between the wire and the workpiece.

The difference $\Delta R$ between the radii of the regular path as commanded and the corrected path becomes as follows, and is understood to be greatly influential: Assuming by way of example $\varepsilon_o = 0.15$ mm, $R = 1.5$ mm, $F/F_o = 1$ and $D_o = 0.1$ mm,

$$D_R = -0.0042 \text{ mm}$$

$$D_T = 0.1 \text{ mm}$$

Therefore,

$$\Delta R = \sqrt{D_T{}^2 + (R - D_R)^2} - R = 0.0075 \text{ mm}$$

($\Delta R = 0.0033$ mm when $D_R$ is not taken into account). In addition, in case of $R = 0.3$ mm

$$\Delta R = 0.0362 \text{ mm}$$

To be noted in case of applying the present method is that, since $\alpha$ in Figure 5 takes $0 - \pi$ into consideration in the calculations, a path which causes the electric discharge in only one surface in the advancing direction must not be traced. Accordingly, $R - \varepsilon_o > 0$ must be maintained.

It is premised that any corner part is provided with R. This brings about quite no hindrance in practical use because, in case of actually fabricating an extrusion mold, all the corner parts must be provided with R in order to bring concave and convex parts into exact correspondence.

As set forth above, in case of cutting a workpiece into a desired shape by the use of an electric discharge machine, the flexure of a wire electrode based on pressure developing between the wire electrode and the workpiece is calculated in each of a straight line machining operation and a circular arc machining operation, and a machining path is successively corrected on the basis of the calculated values, whereby a desired machining path involving no error is attained. In the straight line machining operation, even when the advancing direction is orthogonally changed, the component by which the wire electrode is dragged can be compensated, while in the circular arc machining operation, a similar error involved can be corrected, so that products of high machining accuracy can be fabricated. Accordingly, in case of forming a metal mold or the like by the use of the electric discharge machine, the metal mold can be endowed with a good quality, and a product formed by the metal mold becomes one of good quality scarcely having an error with respect to the original mold. The present invention is applicable to all the other fields in which electric discharge machining is carried out.

## Claims

1. A method of controlling the operation of a wire-cut electric discharge machine wherein electric discharge is produced between a wire electrode and a workpiece by applying therebetween electric discharge shots and by producing relative movement between the workpiece and the wire electrode so that the workpiece is cut into a predetermined shape, wherein an error component in the machining path is compensated characterised in that the error component which is compensated is ascribable to flexure of the wire electrode caused by the electric discharge, and is compensated automatically in linear machining by utilising a calculated compensation flexure value $D_T$ in a direction tangential to a machining path, and is compensated in circular arc machining utilising the tangential compensation flexure value $D_T$ and also a calculated compensation flexure value $D_R$ in a direction radial to the machining path, wherein $D_T$ is automatically calculated on the basis of a measured flexure value $D_o{}'$ occurring during straight line machining at a predetermined cutting speed $F_o$, the corresponding machined groove width $2\varepsilon_o$ and the wire diameter $\phi$, and $D_R$ is automatically calculated on the basis of the measured flexure value $D_o{}'$ and the radius R of the machining path, the calculations being made assuming that the energies of successive shots of the electric discharge are equal, and in dependence upon the following expressions:

$$D_T = \frac{F}{F_o} D_o,$$

and

$$D_R = D_o \cdot \frac{4}{3\pi} \cdot \frac{F}{F_o} \cdot \frac{\varepsilon_o}{R}$$

wherein F is the cutting speed for which the compensation is applied and wherein $D_o$ is the actual wire electrode flexure value caused by the electric discharge during straight line machining at the predetermined cutting speed $F_o$ and is calculated from the expression

$$D_o = D_o' + (2\varepsilon_o - \phi)/2.$$

2. A wire-cut electric discharge machining apparatus operable to carry out the method of claim 1 and comprising a numerical control device (101) including: a memory (101a) which stores a processing program for shape compensation as defined in claim 1 and a control program for executing other numerical control processing; a processing unit (101b) for executing predetermined processing on the basis of commands from the control program and a machining program; a data memory (101c) for storing data and other calculated results; and a storage medium reader (101d) for reading a machining program containing machining data such as electric discharge machining paths and machining speeds, the numerical control device (101) being coupled to a wire-cut electric discharge machine (107) provided with a contact sensing device (107a) for detecting contact between a wire electrode and a workpiece.

3. A wire-cut electric discharge machining apparatus according to claim 2, wherein the numerical control device (101) is coupled to the wire-cut electric discharge machine (107) by pulse distributors (103, 104) for executing predetermined pulse distribution calculations on the basis of movement value commands ($X_c$ and $Y_c$) issued from the numerical control device (101), so as to provide distributed pulses ($X_p$ and $Y_p$) for moving direction controllers (105, 106) operable to change the signs of the distributed pulses and then provide the resulting pulses in retraction control.

4. A wire-cut electric discharge machining apparatus according to claim 2 or 3, wherein auxiliary function instructions for flexure value measurement are entered in suitable places of the machining program.

## Patentansprüche

1. Verfahren zum Steuern des Betriebs einer Schneiddraht-Elektroentladungsbearbeitungsmaschine, bei der eine elektrische Entladung zwischen einer Drahtelektrode und einem Werkstück erzeugt wird, durch Anlegen elektrischer Entladungsspannungsimpulse zwischen diese und durch Erzeugen einer relativen Bewegung zwischen dem Werkstück und der Drahtelektrode, so daß das Werkstück in eine vorbestimmte Form geschnitten wird, wobei eine Fehlerkomponente in dem Bearbeitungspfad kompeniseirt wird, dadurch gekennzeichnet, daß die Fehlerkomponente, die kompensiert wird, zurückführbar auf die Drahtelektrodenbiegung ist, die durch die elektrische Entladung verursacht wird, und automatisch bei einer geradlinigen Bearbeitung durch Benutzung eines berechneten Kompensationsbeigungswerts $D_T$ in einer Richtung tangential zu einem Bearbeitungspfad kompensiert wird und bei einer Kreisbogenförmigen Bearbeitung unter Benutzung des tangentialen Kompensationsbiegungswerts $D_T$ und außerdem eines berechneten Kompensationsbiegungswerts $D_R$ in einer Richtung radial zu dem Bearbeitungspfad kompensiert wird, wobei $D_T$ automatisch auf der Grundlange eines gemessenen Biegungswerts $D_o'$ berechnet wird, der während einer geradlinigen Bearbeitung bei einer vorbestimmten Schneidgeschwindigkzit $F_o$, der entsprechenden ausgearbeiteten Fugenbreite $2\varepsilon_o$ und dem Drahtdurchmesser $\phi$ auftritt, und $D_R$ automatisch auf der Grundlage des gemessenen Biegungswerts $D_o'$ und des Radius R des Bearbeitungspfades berechnet wird, wobei die Berechnungen unter der Annahme ausgeführt werden, daß die Energienhalte der aufeinanderfolgenden Impulse der elektrischen Entladungen gleich sind, und in Abhängigkeit von den folgenden Ausdrücken durchgeführt werden:

$$D_T = \frac{F}{F_o} D_o$$

und

$$D_R = D_o \frac{4}{3\pi} \cdot \frac{F}{F_o} \cdot \frac{\varepsilon_o}{R},$$

wobei F die Schneideschwindigkeit ist, auf die die Kompensation angewendet wird, und wobei $D_o$ der aktuelle Drahtelektrodenbiegungswert ist, der durch die elektrische Entladung während der geradlinigen Bearbeitung bei der vorbestimmten Schneidgeschwindigkeit $F_o$ verursacht wird und berechnet wird aus dem Ausdruck

$$D_o = D_o' + (2\varepsilon_o - \phi)/2.$$

2. Schneiddraht-Elektroentladungsbearbeitungsmaschine, die betreibbar ist, um das Verfahren nach Anspruch 1 durchzuführen, und die eine numerische Steuereinrichtung (101) umfaßt, die enthält:

einer Speicher (101a), der ein Bearbeitungsprogram zur Formkomponensation, wie sie in Anspruch 1 angegeben ist, und ein Steuerprogramm zum Ausführen einer weiteren Steuerverarbeitung speichert,

eine Verarbeitungseinheit (101b) zum Ausführen einer vorbestimmten Verarbeitung auf der Grundlage von Befehlen aus dem Steuerprogramm und einem Bearbeitungsprogramm,

einen Datenspeicher (101c) zum Speichern von Daten und weiteren berechneten Ergebnissen und

eine Speicherausleseeinrichtung (101d) zum Auslesen eines Bearbeitungsprogramms, das Bearbeitungsdaten, wie Daten betreffend Elektroentladungsbearbeitungspfade und Bearbeitungsgeschwindigkeit, enthält,

wobei die numerische Steuereinrichtung (101) mit einer Drahtschneide-Elektroentladungsmaschine (107) verbunden ist, die mit einer Berührungserfassungseinrichtung (107a) zum Erfassen einer Berührung zwischen einer Drahtelektrode und einem Werkstück versehen ist.

3. Schneiddraht - Elektroentladungsbearbeitungsmaschine nach Anspruch 2, bei der die numerische Steuereinrichtung (101) mit der Schneiddraht-Elektroentladungsbearbeitungsmaschine (107) durch Impulsverteiler (103, 104) zum Ausführen von vorbestimmten Impulsverteilungsberechnungen auf der Grundlage von Bewegungswert-Befehlen ($X_c$ und $Y_c$), die von der numerischen Steuereinrichtung (101) ausgegeben werden, verbunden ist, um auf diese Weise verteilte Impulse ($X_p$, $Y_p$) für Bewegungssteuereinrichtungen (105, 106) zu erzeugen, die betreibbar sind, um die Vorzeichen der verteilten Impulse zu wechseln und dann die sich ergebenden Impulse in einer Rückzugsbewegungssteuerung bereitzustellen.

4. Schneiddraht - Elektroentladungsbearbeitungsmaschine nach Anspruch 2 oder 3, bei der Hilfsfunktionsbefehle yur Biegungswertmessung in geeignete Plätze des Bearbeitungsprogamms eingegeben werden.

**Revendications**

1. Un procédé de commande de l'opération d'une machine à décharge électrique à fil dans lequel une décharge électrique est produite entre une électrode à fil et une pièce à usiner en appliquant entre elles des coups de décharges électriques et en produisant un mouvement relatif entre la pièce à usiner et l'électrode à fil de sorte que la pièce à usiner est découpée selon une forme prédéterminée, dans lequel une composante d'erreur dans le trajet d'usinage est compensée, caractérisé en ce que la composante d'erreur qui est compensée est attribuable à la flexion de l'électrode à fil provoquée par la décharge électrique, et est automatiquement compensée en usinage linéaire par l'utilisation d'une valeur de flexion de compensation calculée $D_T$ dans une direction tangentielle à un trajet d'usinage, et est compensée dans l'usinage en arc circulaire en utilisant la valeur de flexion de compensation tangentielle $D_T$ et également une valeur de flexion de compensation calculée $D_R$ selon une direction radiale au trajet d'usinage, dans lequel $D_T$ est calculé de manière automatique sur la base d'une valeur de flexion mesurée $D_o$, se produisant pendant l'usinage en ligne droite à une vitesse de coupe prédéterminée $F_o$, la largeur du sillon usiné correspondante $2\varepsilon_o$ et le diamètre de fil $\phi$, et $D_R$ est calculé de manière automatique sur la base de la valeur de flexion mesurée $D_o$, et le rayon R du trajet d'usinage, les calculs étant effectués en prenant pour hypothèse que les énergies des coups successifs de la décharge électrique sont égales, et en fonction des expressions suivantes:

$$D_T = \frac{F}{F_o} D_o,$$

et

$$D_R = D_o \cdot \frac{4}{3\pi} \cdot \frac{F}{F_o} \cdot \frac{\varepsilon_o}{R}$$

dans lesquelles F est la vitesse de coupe pour laquelle la compensation est appliquée et dans lesquelles $D_o$ est la valeur effective de flexion de l'électrode à fil provoquée par la décharge électrique pendant l'usinage en ligne droite à la vitesse de coupe prédéterminée $F_o$ et est calculée à partir de l'expression

$$D_o = D_o' + (2\varepsilon_o - \phi)/2$$

2. Un dispositif d'usinage à décharge électrique à fil pouvant fonctionner pour mettre en oeuvre le procédé de la revendication 1 et comprenant un dispositif à commande numérique (101) incluant: une mémoire (101a) qui mémorise un programme de traitement pour la compensation de forme tel que défini à la revendication 1 et un programme de commande pour exécuter un autre traitement à commande numérique; une unité de traitement (101b) pour exécuter un traitement prédéterminé sur la base de commandes provenant du programme de commande et d'un programme d'usinage; une mémoire de données (101c) pour la mémorisation des données et d'autres résultats calculés; et un lecteur de support de mémorisation (101d) servant à lire un programme d'usinage contenant des données d'usinage telles que des trajets d'usinage à décharge électrique et des vitesses d'usinage, le dispositif à commande numérique (101) étant couplé à une machine à décharge électrique à fil (107) prévue avec un dispositif de détection de contact (107a) pour détecter un contact entre une électrode à fil et une pièce à usiner.

3. Un dispositif d'usinage à décharge électrique à fil conformément à la revendication 2, dans lequel le dispositif à commande numérique (101) est couplé à la machine à décharge électrique à fil (107) par des distributeurs d'impulsions (103, 104) pour exécuter des calculs de répartition d'impulsions prédéterminés sur la base de commandes de valeurs de déplacement ($X_c$ et $Y_c$) émises à partir du dispositif à commande numérique (101), de sorte à fournir des impulsions réparties ($X_p$ et $Y_p$) pour déplacer des contrôleurs de direction (105, 106) pouvant fonctionner pour modifier les signes des impulsions réparties et ensuite fournir les impulsions obtenues en commande de rétraction.

4. Un dispositif d'usinage à décharge électrique à fil conformément à la revendication 2 ou 3, dans lequel des instructions de fonction auxiliaire pour la mesure de valeurs de flexion sont entrées à des endroits appropriés du programme d'usinage.

# Fig. 1

# Fig. 2

# Fig. 3

# Fig. 4

# Fig. 5

# Fig. 6

# Fig. 7

# Fig. 8

# Fig. 9

# Fig. 10

# Fig. 11

### (a)

### (b)

# Fig. 12

Start machining.

Straight machining of first block.

Command M 100

Stop machining temporarily

Retract wire till release of shorting.

Store D' and Fo.

Amend D' into, e.g. Do=Do'+g

Restart machining.

MO2 Command

Clear Do.

Stop machining.

End of Machining

# Fig. 13

Machine n-th block

Memory
Current Block Data and
Current Position
$x_n$   $y_n$
$G_n$  $\Delta x_n$  $\Delta y_n$  $I_n$  $J_n$

Current Positions
Original Position $(x_{i-1}, y_{i-1})$
Corrected Position $(X_{i-1}, Y_{i-1})$

Original Position of Next
Point   $(x_i, y_i)$
Others
Value  of  $F_o$ , $F$
Value  of  $D_o$, Machined Groove
Width  $\epsilon_o$

$G_n$ 1

$G_n$

$$D_T = \frac{F}{F_o} D_o$$
$$D_R = 0$$
$$\cos \theta = f_1$$
$$\sin \theta = g_1$$

2.3

$$D_T = \frac{F}{F_o} D_o$$
$$R = \sqrt{I^2 + J^2}$$
$$D_R = \frac{4}{3\pi} \frac{F}{F_o} \frac{\epsilon_0}{R}$$
$$\cos \theta = f_2$$
$$\sin \theta = g_2$$

$G_n$   3

2

$$D_T = -D_T$$

$$X_i = x_i + D_T \sin\theta + D_R \cos\theta$$
$$Y_i = y_i - D_T \cos\theta + D_R \sin\theta$$
$$\Delta X = X_i - X_{i-1}$$
$$\Delta Y = Y_i - Y_{i-1}$$

Feed Pulses

Replace Memory
Contents $x_1, y_1,$
$X_1, Y_1$  etc.

Servo Circuits $S_x, S_y$

Motors  $(M_x)$  $(M_y)$

# Fig. 14

EP 0 068 027 B1